# EUROPEAN PATENT SPECIFICATION

(11) **EP 1 357 698 B1**
(45) Date of publication and mention of the grant of the patent: **07.03.2007**
(21) Application number: 02291057.4
(22) Date of filing: 25.04.2002
(51) Int. Cl.: H04L 12/24, H04L 12/56, H04Q 3/00

(54) **State-based policy management method for a communications transport network, network element and policy server for its implementation**
Status - basierende Verfahrensverwaltungsmethode für ein Kommunikationstransportnetz
Méthode de gestion de règles pour un réseau de transport de communication basée sur l'état de ce réseau transport

(43) Date of publication of application: 29.10.2003
(73) Proprietor: ALCATEL, 75008 Paris (FR)
(72) Inventor: Massimo, Canali, 20059 Vimercate (Milano) (IT); Paolo, Molgora, 20090 Settala (Milano) (IT)
(74) Representative: Menzietti, Domenico

(56) References cited:
- EP-A- 1 047 226
- WO-A-00/31929
- WO-A-00/35130
- RAMANUJAN R ET AL: "An automated resource management tool for policy-driven QoS control within integrated services intranets" LOCAL COMPUTER NETWORKS, 1998. LCN '98. PROCEEDINGS., 23RD ANNUAL CONFERENCE ON LOWELL, MA, USA 11-14 OCT. 1998, LOS ALAMITOS, CA, USA,IEEE COMPUT. SOC, US, 11 October 1998 (1998-10-11), pages 305-314, XP010310390 ISBN: 0-8186-8810-6
- S. HERZOG: "RSVP Extensions for Policy control" NETWORK WORKING GROUP RFC 2750, 1 January 2000 (2000-01-01), XP002218180
- R. YVATAKAR ET AL: "A framework for Policy-based Admission control" ANETWORK WORKING GROUP RFC 2753, 1 January 2000 (2000-01-01), XP002218181
- S. HERZOG ET AL: "COPS usage for RSVP" NETWORK WORKING GROUP RFC 2749, 1 January 2000 (2000-01-01), XP002218182

## Description

The present invention relates to a state-based policy management method for a communications transport network according to the preamble of claim 1, and to a network element and a policy server according to the preamble of respectively claims 5 and 9.

Traditional communications transport networks provide for rigid communications services. The so-called "intelligent transport networks" will provide for flexible communications services.

Additionally, in these new communications transport networks the users will be able to directly provision its communications transport services while in the traditional networks the provisioning of services is done in a centralised way by a network management application. To this regard, the International Telecommunication Union [ITU] has recently carried out some standardisation activity relating to the so-called "Automatic Switched Transport Networks" [ASTN]. For the sake of precision, till now, the standardisation activity of ITU relating to a new generation of communications transport networks was mainly concentrated on the so-called "Optical Transport Networks" [OTN], probably because future communications transport networks will be very often realised through optical fibres.

For the Internet network, the Internet Engineering Task Force [IETF], a well known international community concerned with the evolution of the Internet architecture and operation, proposed a network-control protocol, called "RSVP", in order to enable Internet applications to obtain different qualities of service for different types of data flows; this was done particularly in view of the transmission of real-time and high-bandwidth information over the Internet. RSVP allows an Internet application to reserve some network resources for carrying out an own transmission; RSVP provides for periodic refresh messages in order to maintain those resources as reserved; in the absence of refresh messages those resources are freed.

Recently, IETF has proposed an architecture and a protocol, called "COPS", for policy control suitable for the Internet network, as respectively described in documents RFC 2753 and RFC 2748; additionally; this architecture provides for a policy server and a plurality of policy clients; IETF has also provided for an extension of RSVP for allowing policy control, and for usage directives of COPS for RSVP environments, as respectively described in documents RFC 2750 and RFC 2749.

Any communications transport network, and particularly an Intelligent Transport Network [ITN] whether optical or not, requires policy control; in other words, the network must have the possibility to determine whether or not access and usage of a internal network resource should be granted to a network user that is external to the network. In order to be able to use communications transport services provided by the network, a user needs a Service Level Agreement [SLA].

Particularly in those cases when a user frequently and/or directly requests and releases various network resources, it is important that the entity or entities in charge of policy management be promptly informed of any successful request and release by a user. Such cases were extremely rare in the traditional transport networks where provisioning of services was done in a centralised way by a network management application, and the solution to this problem was simple: the centralised network manager informed the centralised policy manager of any change in resources allocation.

The idea of applying the abovementioned solutions devised for the Internet network to the communications transport networks leaves a very important problem unresolved: how and when to inform the policy server that a connection within the transport network has been removed.

Of course it would be possible that the policy server checks directly with the transport network the status of the connections within the network and then updates its archives; anyway, this solution would imply a lot of work and some updating delay.

Document R.Ramanujan - An Automated Resource Management Tool for Policy-Driven QoS Control within Integrated Services Intranets (Oct.11, 1998) discloses a Manager (block "QoS Manager" in Fig.3) controlling in a centralized way the dynamic allocation and reconfiguration of network connections and controlling policies defining the network quality of service.

International patent application having publication number WO 00/31929 discloses an Enterprise Control Point (block 50 in Fig.4) responsible to manage in centralized way reserved resources in a telecommunications network; the Enterprise Control Point identifies a connection within the network that can satisfy the requested Quality of Service/Class of Service and reserves the requested resources along the connection.

It is the object of the present invention to provide a simpler solution to the abovementioned problem.

This object is substantially achieved by the policy management method having the functionalities set out in independent claim 1.
The basic idea underlying the present method is that, when a connection within the transport network is removed, the or each policy client associated to such connection causes the deletion of policy information associated to such connection within the policy server and thereafter the policy server considers such connection as removed.

Further advantageous functionalities of the present method are set out in the dependent claims.

According to further aspects, the present invention relates also to a network element and to a policy server for implementation of the present method and having respectively the features set out in independent claims 5 and 9; further advantageous features of the element and of the server are set out in the respective dependent claims.

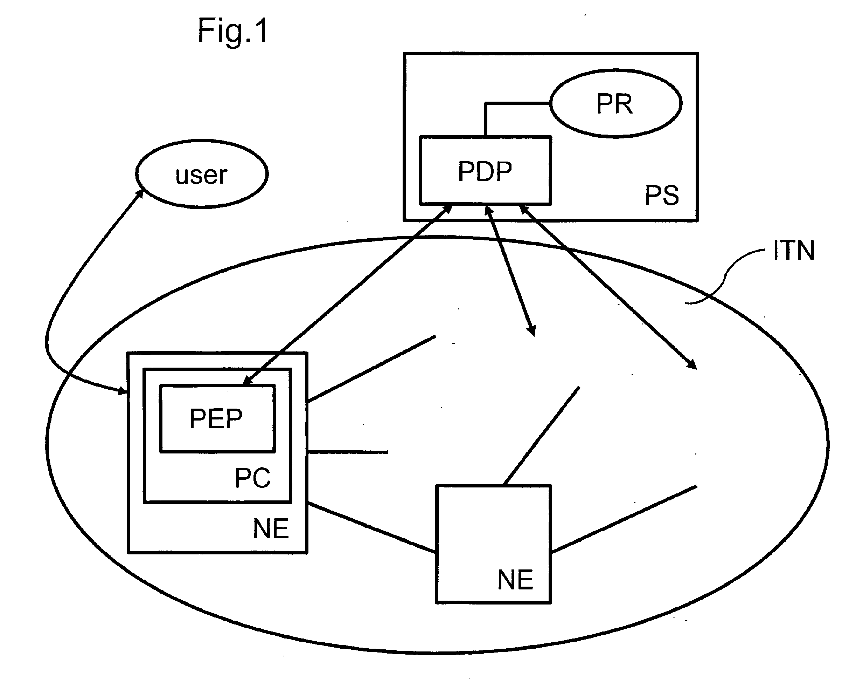

The invention will become more apparent from the following description to be considered in conjunction with the accompanied drawing wherein Fig.1 shows a block diagram of an intelligent transport network ITN provided with a policy server PS, where, for example, the present invention may be used; a network user is also schematically shown in Fig.1.

Network ITN comprises a plurality of network elements NE; for simplicity, only two network elements NE are shown in Fig.1 and only for one of them some internal details are shown; the physical connections of the network elements are shown only schematically.

Network ITN may be, for example, an Intelligent Optical transport Network [ION].

Network ITN is managed from an administrative point of view by a policy management application. To this purpose, network ITN comprises a policy server PS and some of the network elements NE of network ITN comprise an own policy client PC. Policy server PS is connected to and in communication with policy clients PC. In the example of Fig.1, the policy architecture corresponds to the architecture described in IETF document RFC 2753 and policy communication takes place according to COPS protocol as described in IETF document RFC 2748.

Policy server PS is the entity of network ITN who has the task of managing the service level agreements [SLA] of the users of network ITN. To this purpose, policy server PS comprises a policy decision point application PDP which is, for example, basically implemented as a software process and a policy repository PR for storing at least information relating to service level agreements.

Policy clients PC are the entities of network ITN who have the task of enforcing service level agreements [SLA], i.e. to ensure that a user may obtain and use a service only in accordance with his service level agreement. To this purpose, policy client PC comprises a policy enforcement point application PEP which is, for example, basically implemented as a software process.

For the sake of precision, policy communication takes place between policy decision point application PDP and policy enforcement point applications PEP through COPS protocol.

Policy management takes place within network ITN through an exchange of messages between applications PEP and application PDP; according to a simplified description of the policy management activity, an application PEP sends request messages to application PDP and application PDP replies to that application PEP with decision messages; both the PEP and the PDP keeps track of the request/decision pairs as state information; states from various events (request/decision pairs) may be inter-associated. In general, the installation of a new connection within the network implies a number of events. According to COPS protocol, a handle uniquely identifies a state for both a PEP and the PDP. PDP may store state information inside repository PR.

The policy management method according to the present invention is based on the use of state information; it is suitable for a communications transport network comprising a plurality of network elements and wherein it is provided that users of the transport network directly provision communications transport services; additionally, it is adapted to be implemented within a policy network comprising a policy server and a plurality of policy clients associated to network elements of the transport network.

In order to achieve the abovementioned object, the method according to the present invention provides that when a connection within the transport network is removed, the or each policy client associated to such connection causes the deletion of the or each state associated to such connection within the policy server and thereafter the policy server considers said connection as removed.

In order to have a short delay between the time when the connection is removed within the network and the time when the policy server is aware of that, it may be advantageously provided that the policy server considers the connection as removed as soon as the last state associated to such connection is deleted. This may be achieved, for example, in the following way: when the program code portion (e.g. a subroutine or a process) running inside of the policy server and in charge of deleting state information receives a state deletion request, it deletes the state, it determines whether a connection is associated to such state and, in the affirmative, it checks whether there remains at least one state associated to such connection within the policy server; if this does not happen, i.e. if that was the last state associated to that connection, it signals that that connection has been removed within the network.

If the policy server comprises a policy repository, when the policy server considers a connection as removed it may advantageously update its policy repository.

In order to guarantee that the users of the network fully exploit their SLAs at any time, the method according to present invention advantageously provide that when the policy server considers a connection as removed it updates user information within its policy repository for all policy clients associated to the removed connection; for example, if a user, according to its SLA, is authorised to have a certain number of connections and to use certain resources of the network for its connections, when a connection requested by that user is removed, the policy server may update its policy repository by increasing the number of connections still available for that user and by marking the released resources as available for connections.

In order to implement the method according to the present invention, both the network elements and the policy server have to be appropriately designed and realized.

The network element according to the present invention, comprises a policy client adapted to co-operate with a policy server of the transport network in order to implement a state-based policy management method.

In order to be adapted to implement the method according to the present invention, the network element comprises further means for sending at least one request of policy state deletion to the policy server when a connection within the transport network is removed; the number of state deletion requests may depend on the specific implementation of the method and/or on the specific connection that has been removed.

If the network element comprises also means for internally storing policy states associated to connections within the transport network, and means for internally deleting the or each policy state associated to a removed connection within the transport network, the sending means may be further advantageously adapted to request the policy server to internally delete the or each policy state associated to the removed connection within the transport network.

In the case of COPS model, as there is perfect correspondence between the states of the policy client and the states of the policy server, the policy client can precisely specify (through the unique handler) which states to delete.

Such a network element may be further adapted for the implementation of the various other functionalities of the method according to the present invention.

The policy server according to the present invention is adapted to cooperate with the policy clients of the transport network in order to implement a state-based policy management method.

In order to be adapted to implement the method according to the present invention, the policy server comprises means for receiving from the policy clients requests of policy state deletion, and means for processing such deletion requests, adapted to understand when a connection within the transport network has been removed.

If the policy server comprises also means for storing policy states associated to connections within the transport network, and means for deleting policy states associated to connections within the transport network, the processing means may be further advantageously adapted to check when the or each policy state associated to a connection has been deleted and to derive therefrom that such connection has been removed.

In the case of COPS model, as there is perfect correspondence between the states of the policy client and the states of the policy server, the policy server can receive from the policy clients precise specification (through the unique handler) of the states that have to be deleted.

Such a policy server may be further adapted for the implementation of the various other functionalities of the method according to the present invention.

The method and the apparatuses according to the present invention may be implemented partly or entirely in software.

Therefore, a first further aspect of the present invention consists in a processor program product comprising program code portions adapted for the implementation of the method according to the present invention when executed by a processor.

A second further aspect of the present invention consists in memory means storing a processor program product comprising program code portions adapted for the implementation of the method according to the present invention when executed by a processor.

## Claims

1. State-based policy management method for a communications transport network (ITN) comprising a plurality of network elements (NE), the method being adapted to be implemented within a policy network comprising a policy server (PS), **characterized in that** it is provided that users of the transport network (ITN) directly provision communications transport services, and **in that** the method is adapted to be implemented within the policy network further comprising a plurality of policy clients (PC) associated to network elements (NE) of the transport network (ITN), and **in that** when a connection within the transport network (ITN) is removed, the or each policy client (PC) associated to said connection causes the deletion of the or each state associated to said connection within the policy server (PS) and thereafter the policy server (PS) considers said connection as removed.

2. Method according to claim 1, wherein the policy server (PS) considers said connection as removed as soon as the last state associated to said connection is deleted.

3. Method according to claim 1 or 2, wherein the policy server (PS) comprises a policy repository (PR) and wherein when the policy server (PS) considers a connection as removed it updates its policy repository (PR).

4. Method according to claim 3, wherein when the policy server (PS) considers a connection as removed it updates user information within its policy repository (PR) for all policy clients associated to the removed connection.

5. Network element (NE) for a communications transport network (ITN), the transport network comprising a policy server (PS) in order to implement a state-based policy management method according to claim 1, **characterised in that** the network element further comprises a policy client (PC) adapted to cooperate with the policy server and **in that** the network element further comprises:
- means for sending at least one request of policy state deletion to the policy server (PS) when the connection within the transport network (ITN) is removed.

6. Network element (NE) according to claim 5, comprising further:
- means for internally storing policy states associated to connections within the transport network (ITN), and
- means for internally deleting the or each policy state associated to a removed connection within the transport network (ITN);
wherein said sending means are adapted to request the policy server (PS) to internally delete the or each policy state associated to said removed connection within the transport network (ITN).

7. Network element (NE) according to claim 5 or 6, wherein said sending means are adapted to implement COPS protocol.

8. Policy server (PS) for a communications transport network (ITN), said network (ITN) being of the type comprising a plurality of network elements (NE) **characterized in that** the network further comprises a plurality of policy clients (PC) associated to network elements (NE) of the network (ITN), and **in that** the policy server (PS) is adapted to co-operate with the policy clients (PC) in order to implement a state-based policy management method according to claim 1, the policy server comprising :
- means for receiving from the policy clients (PC) requests of policy state deletion, and
- means for processing said deletion requests, adapted to understand when a connection within the transport network (ITN) has been removed.

9. Policy server (PS) according to claim 8, comprising further:
- means for storing policy states associated to connections within the transport network (ITN),
- means for deleting policy states associated to connections within the transport network (ITN);
wherein said processing means are adapted to check when the or each policy state associated to a connection has been deleted and to derive therefrom that said connection has been removed.

10. Policy server (PS) according to claim 8 or 9, wherein the receiving means are adapted to implement COPS protocol.

11. Processor program product comprising program code portions adapted for the implementation of each step of method according to any of claims from 1 to 4 when executed by a processor.

12. Memory means storing a processor program u comprising program code portions adapted for the implementation of each step of the method according to any of claims from 1 to 4 when executed by a processor.

## Patentansprüche

1. Status-basiertes Richtlinienverwaltungsverfahren (policy management method) für ein Kommunikationstransportnetz (ITN), das eine Vielzahl von Netzelementen (NE) umfasst, wobei das Verfahren dafür ausgelegt ist, in einem Richtlinien-Netz (policy network) implementiert zu sein, das einen Richtlinien-Server (policy server) (PS) umfasst, **dadurch gekennzeichnet, dass** dafür gesorgt wird, dass die Nutzer des Transportnetzes (ITN) Kommunikationstransportdienste direkt bereitstellen, und dass das Verfahren dafür ausgelegt ist, in dem Richtlinien-Netz implementiert zu sein, das ferner eine Vielzahl von Richtlinien-Clients (policy clients) (PC) umfasst, die zu Netzelementen (NE) des Transportnetzes (ITN) gehören, und dass, wenn eine Verbindung im Transportnetz (ITN) beseitigt wird, der oder jeder Richtlinien-Client (PC), der zu dieser Verbindung gehört, die Löschung des oder jedes zu dieser Verbindung gehörigen Status im Richtlinien-Server (PS) bewirkt und danach der Richtlinien-Server (PS) diese Verbindung als beseitigt betrachtet.

2. Verfahren nach Anspruch 1, bei dem der Richtlinien-Server (PS) die Verbindung als beseitigt betrachtet, sobald der letzte zu dieser Verbindung gehörige Status gelöscht ist.

3. Verfahren nach Anspruch 1 oder 2, bei dem der Richtlinien-Server (PS) eine Richtlinien-Speicherbibliothek (PR) umfasst und bei dem, wenn der Richtlinien-Server (PS) eine Verbindung als beseitigt betrachtet, er seine Richtlinien-Speicherbibliothek (PR) aktualisiert.

4. Verfahren nach Anspruch 3, bei dem, wenn der Richtlinien-Server (PS) eine Verbindung als beseitigt betrachtet, er Nutzerinformation in seiner Richtlinien-Speicherbiblitohek (PR) für alle zur beseitigten Verbindung gehörigen Richtlinien-Clients aktualisiert.

5. Netzelement (NE) für ein Kommunikationstransportnetz (ITN), wobei das Netz einen Richtlinien-Server (PS) umfasst, um ein status-basiertes Richtlinienverwaltungsverfahren nach Anspruch 1 zu implementieren, **dadurch gekennzeichnet, dass** das Netzelement ferner einen Richtlinien-Client (PC) umfasst, der dafür ausgelegt ist, mit dem Richtlinien-Server zusammenzuarbeiten, und dass das Netzelement ferner umfasst:
- Mittel zum Senden wenigstens einer Anfrage zur Richtlinienstatuslöschung an den Richtlinienserver (PS), wenn die Verbindung im Transportnetz (ITN) beseitigt ist.

6. Netzelement (NE) nach Anspruch 5, das ferner umfasst:
- Mittel zum internern Speichern von Richtlinienstatus, die zu Verbindungen im Transportnetz (ITN) gehören, und
- Mittel zum internern Löschen des oder jedes Richtlinienstatus, der zu einer beseitigten Verbindung im Transportnetz (ITN) gehört;
wobei die Sendemittel dafür ausgelegt sind, den Richtlinien-Server (PS) aufzufordern, intern den oder jeden Richtlinienstatus zu löschen, der zur beseitigten Verbindung im Transportnetz (ITN) gehört.

7. Netzelement (NE) nach Anspruch 5 oder 6, bei dem die Sendemittel dafür ausgelegt sind, ein COPS-Protokoll zu implementieren.

8. Richtlinien-Server (PS) für ein Kommunikationsnetz (ITN), wobei das Netz (ITN) von der Art ist, die eine Vielzahl von Netzelementen (NE) umfasst, **dadurch gekennzeichnet, dass** das Netz ferner eine Vielzahl von Richtlinien-Clients (PC) umfasst, die zu Netzelementen (NE) des Netzes (ITN) gehören, und dass der Richtlinien-Server (PS) dafür ausgelegt ist, mit den Richtlinien-Clients (PC) zusammenzuarbeiten, um ein status-basiertes Richtlinienverwaltungsverfahren nach Anspruch 1 zu implementieren, wobei der Richtlinien-Server umfasst:
- Mittel zum Empfangen von Anforderungen zur Richtlinienstatuslöschung von den Richtlinien-Clients (PC) her, und
- Mittel zum Verarbeiten dieser Löschungsanforderungen, die dafür ausgelegt sind zu verstehen, wann eine Verbindung im Transportnetz (ITN) beseitigt wurde.

9. Richtlinien-Server (PS) nach Anspruch 8, der ferner umfasst:
- Mittel zum Speichern von Richtlinienstatus, die zu Verbindungen im Transportnetz (ITN) gehören,
- Mittel zum Löschen von Richtlinienstatus, die zu Verbindungen im Transportnetz (ITN) gehören;
wobei die Verarbeitungsmittel dafür ausgelegt sind zu prüfen, wann der oder jeder zu einer Verbindung gehörige Richtlinienstatus gelöscht wurde und daraus herzuleiten, dass die Verbindung beseitigt wurde.

10. Richtlinien-Server (PS) nach Anspruch 8 oder 9, bei dem die Empfangsmittel dafür ausgelegt sind, ein COPS-Protokoll zu implementieren.

11. Prozessorprogrammprodukt, das Programmcodeabschnitte umfasst, die für die Implementierung jedes Schrittes des Verfahrens nach einem der Ansprüche 1 bis 4 ausgelegt sind, wenn es von einem Prozessor ausgeführt wird.

12. Speichermittel, die ein Prozessorprogrammprodukt speichern, das Programmcodeabschnitte umfasst, die für die Implementierung jedes Schrittes des Verfahrens nach einem der Ansprüche 1 bis 4 ausgelegt sind, wenn es von einem Prozessor ausgeführt wird.

## Revendications

1. Procédé de gestion de règles - basé sur l'état - pour un réseau de transport de communications (ITN) comprenant une pluralité d'éléments de réseau (NE), le procédé étant adapté pour être mis en oeuvre à l'intérieur d'un réseau géré sur la base de règles comprenant un serveur géré sur la base de règles (PS), **caractérisé en ce qu'**il est prévu que des utilisateurs du réseau de transport (ITN) dimensionnent directement des services de transport de communications, et **en ce que** le procédé est adapté pour être mis en oeuvre à l'intérieur du réseau géré sur la base de règles comprenant par ailleurs une pluralité de clients gérés sur la base de règles (PC) qui sont associés aux éléments de réseau (NE) du réseau de transport (ITN), et **en ce que**, quand une connexion à l'intérieur du réseau de transport (ITN) est supprimée, le - ou chacun des clients gérés sur la base de règles (PC) qui est associé à ladite connexion provoque la suppression du - ou de chacun des états associés à ladite connexion à l'intérieur du serveur géré sur la base de règles (PS), à la suite de quoi le serveur géré sur la base de règles (PS) considère ladite connexion comme étant supprimée.

2. Procédé selon la revendication 1 dans lequel le serveur géré sur la base de règles (PS) considère ladite connexion comme étant supprimée dès que le dernier état associé à ladite connexion est supprimé.

3. Procédé selon la revendication 1 ou 2 dans lequel le serveur géré sur la base de règles (PS), comprend un entrepôt de règles de gestion (PR) et dans lequel, quand le serveur géré sur la base de règles (PS) considère une connexion comme supprimée, il met à jour son entrepôt de règles de gestion (PR).

4. Procédé selon la revendication 3 dans lequel, quand le serveur géré sur la base de règles (PS) considère une connexion comme supprimée, il met à jour des informations utilisateurs à l'intérieur de son entrepôt de règles de gestion (PR) pour la totalité des clients gérés sur la base de règles qui sont associés à la connexion supprimée.

5. Élément de réseau (NE) pour un réseau de transport de communications (ITN), le réseau de transport comprenant un serveur géré sur la base de règles (PS) afin de mettre en oeuvre un procédé de gestion de règles - basé sur l'état - pour un réseau de transport de communications, selon la revendication 1, **caractérisé en ce que** l'élément de réseau comprend par ailleurs un client géré sur la base de règles (PC) qui est adapté pour collaborer avec le serveur géré sur la base de règles, et **en ce que** l'élément de réseau comprend par ailleurs :
- des moyens pour envoyer au moins une demande de suppression d'état de gestion de règles au serveur géré sur la base de règles (PS) quand la connexion à l'intérieur du réseau de transport (ITN) est supprimée.

6. Élément de réseau (NE) selon la revendication 5 comprenant par ailleurs :
- des moyens pour stocker, de manière interne, des états de gestion de règles associés à des connexions à l'intérieur du réseau de transport (ITN), et
- les moyens pour supprimer, de manière interne, le ou chacun des états de gestion de règles associés à une connexion supprimée à l'intérieur du réseau de transport (ITN) ;
dans lequel lesdits moyens d'envoi sont adaptés pour demander au serveur géré sur la base de règles (PS) de supprimer, de manière interne, le - ou chacun des états de gestion de règles associés à ladite connexion supprimée à l'intérieur du réseau de transport (ITN).

7. Élément de réseau (NE) selon la revendication 5 ou 6 dans lequel lesdits moyens d'envoi sont adaptés pour mettre en oeuvre un protocole COPS.

8. Serveur géré sur la base de règles (PS) pour un réseau de transport de communications (ITN), ledit réseau (ITN) étant du type comprenant une pluralité d'éléments de réseau (NE), **caractérisé en ce que** le réseau comprend par ailleurs une pluralité de clients gérés sur la base de règles (PC) qui sont associés à des éléments de réseau (NE) du réseau (ITN), et **en ce que** le serveur géré sur la base de règles (PS) est adapté pour collaborer avec les clients gérés sur la base de règles (PC) afin de mettre en oeuvre un procédé de gestion de règles
- basé sur l'état - pour un réseau de transport de communications, selon la revendication 1, le serveur géré sur la base de règles comprenant :
- des moyens pour recevoir, de la part de clients gérés sur la base de règles (PC), des demandes de suppression d'un état de gestion de règles, et
- des moyens pour traiter lesdites demandes de suppression, qui sont adaptés pour comprendre quand une connexion à l'intérieur du réseau de transport (ITN) a été supprimée.

9. Serveur géré sur la base de règles (PS) selon la revendication 8 comprenant par ailleurs :
- des moyens pour stocker des états de gestion de règles associés à des connexions à l'intérieur du réseau de transport (ITN),
- des moyens pour supprimer des états de gestion de règles associés à des connexions à l'intérieur du réseau de transport (ITN) ;
dans lequel lesdits moyens de traitement sont adaptés pour vérifier quand le - ou chacun des états de gestion de règles associés à une connexion a été supprimé et pour en déduire que ladite connexion a été supprimée.

10. Serveur géré sur la base de règles (PS) selon la revendication 8 ou 9 dans lequel les moyens de réception sont adaptés pour mettre en oeuvre un protocole COPS.

11. Produit de programme de traitement comprenant des portions de code de programme adaptées pour la mise en oeuvre de chacune des étapes du procédé selon l'une quelconque des revendications 1 à 4, quand elles sont exécutées par un processeur.

12. Moyen de stockage contenant un produit de programme de traitement comprenant des portions de code de programme adaptées pour la mise en oeuvre de chacune des étapes du procédé selon l'une quelconque des revendications 1 à 4, quand elles sont exécutées par un processeur.
